# EUROPEAN PATENT SPECIFICATION

(11) **EP 4 453 296 B1**
(45) Date of publication and mention of the grant of the patent: **01.10.2025**
(21) Application number: 22836148.1
(22) Date of filing: 14.12.2022
(51) Int. Cl.: D03D 1/00, B32B 5/08, D03D 9/00, D03D 15/267, D03D 15/275, D03D 15/283, D03D 15/43, D03D 15/46, D03D 15/533, B32B 5/02, B32B 5/26

(54) **WOVEN FABRIC, VACUUM INDUCED RESIN INFUSION PROCESS AND FIBRE REINFORCED COMPOSITE**
GEWEBE, VAKUUMINDUZIERTES HARZINFUSIONSVERFAHREN UND FASERVERSTÄRKTER VERBUNDWERKSTOFF
TISSU TISSÉ, PROCÉDÉ D'INFUSION DE RÉSINE INDUITE PAR LE VIDE ET COMPOSITE RENFORCÉ PAR DES FIBRES

(30) Priority: 20.12.2021 EP 21216045
(43) Date of publication of application: 30.10.2024
(73) Proprietor: Vitrulan Composites Oy, 50100 Mikkeli (FI)
(72) Inventor: HUOPONEN, Petro, 50180 Mikkeli (FI); FJÄLLSTRÖM, Maija, 36200 Kangasala (FI)
(74) Representative: Pfenning, Meinig & Partner mbB
(86) International application number: PCT/EP2022/085815
(87) International publication number: WO 2023/117620

(56) References cited:
- DE-A1- 3 142 226
- US-A- 4 320 160
- US-A1- 2019 248 106

## Description

The present invention relates to a woven fabric for the manufacture of fibre reinforced composites having an area weight from 50 to 300 g/m², preferably from 100 to 200 g/m² which comprises unidirectional reinforcing fibres, carbon fibres and flow passages forming elements arranged in warp and/or weft direction, and, optionally additives. The flow passages forming elements are arranged transverse to the reinforcing fibres and the carbon fibres forming flow passages at the side of the flow passages forming elements. Moreover, the present invention relates to a vacuum induced resin infusion process for forming a fibre reinforced composite from such woven fabric as well as the fibre reinforced composite.

There has been a need in the market for wind turbine rotor blades for a fabric to be placed between pultruded carbon profiles of the spar constructions of the blades. The fabric does not necessarily need to participate much in providing stiffness or other mechanical characteristics to the blade, but it needs to be electrically conductive in different directions. This is to provide an electrically conductive path for e.g. lightning strike current protection, as explained in Madsen S., Carloni, L., Lightning exposure of Carbon Fiber Composites in wind turbine blades, Proceedings of the Nordic Insulation Symposium DOI:10.5324/nordis.voi24.2293. Also, there is a need for transversal permeability (based on the permeability constant K22) to ensure good wetting and air removal between the spar cap carbon laminates.

Alternatively, the main spar can also be constructed out of hybrid glass/carbon unidirectional (UD) fabrics or hybrid UD pultrusion laminates instead of pultruded carbon laminates but also in this case the main purpose of the interlayer fabric remains the same.

The use of flow fabrics in composites has been known for a long time and multiple solutions exist. US 5,484,642 teaches the use of woven fabrics with substantially round threads, constructed of helically twisted multifilament yarns, for forming flow ducts. Similarly, WO 2020/182908 A1 teaches the application non-reinforcing twisted multifilaments with modulus less than 10GPa in stitched reinforcement for forming resin flow passages. Yet EP 3 174 704 A1 describe the use of infusion promoting layer that is a fabric comprising a plurality of twisted yarns in wind turbine blade.

The existing conductive solutions for interlayer fabrics on the market are based on low weight carbon biaxial fabrics (e.g. CARBON BIAX 300 45/45) with 150g/m² ply weights. In this case the main flow properties are achieved by using a high tex stitch yarn in biaxial fabric to ensure enough free thickness between laminate layers. The drawback in using such carbon biaxial fabrics is apparent due to the high amount of carbon fibres in these directions of the blade spar. Regarding to the conductivity the high amount of carbon fibres results in such a high conductivity which completely exceeding the necessary requirements for such rotor blades. Moreover, this solution has a higher weight and results in higher production costs.

Also, EP 3 419 816 A1 teaches the use of flow layers interleaved with a dry reinforcement stack. Their flow layer can comprise filaments or bundles of second material, which is electrically conductive. They however teach that the second material is placed in an angle between 15 and 75 degrees with respect to the transverse direction to ensure the good electrical contact. This arrangement is however difficult to manufacture and in practice the second material needs to be added in a second step.

US 4 320 160 A discloses a fabric structure for fiber reinforced plastics, which comprises at least two yarn groups composed of straight reinforcing filamentary yarns composed of carbon fibers being free of bends and gathered in one direction in the form resembling a sheet, wherein the yarn groups are integrated with each other by auxiliary filamentary yarns so that the sheet-like faces of the yarn groups are made to confront each other and reinforcing filamentary yarns of one yarn group intersect reinforcing filamentary yarns of the other yarn group, and the auxiliary filamentary yarns have a higher elongation at break than that of the reinforcing filamentary yarns.

It was therefore an object of the present invention to provide a fibre reinforced composite based on a woven fabric having a reduced weight and a sufficient electrical conductivity and is easy and cost-effective to manufacture.

This problem is solved by the woven fabric with the features of claim 1, the vacuum induced resin infusion process of claim 13 and the fibre reinforced composite of claim 15. The further dependent claims mention preferred embodiments.

According to the present invention, a woven fabric for the manufacture of fibre reinforced composites having an area weight from 50 to 300 g/m² is provided, consisting of:
a) 30 to 75 % by weight of unidirectional reinforcing fibres arranged in warp and/or weft direction (preferably arranged in warp direction), wherein the reinforcing fibres are selected from the group consisting of glass fibres, ceramic fibres and combinations thereof,
b) 20 to 50 % by weight of electrical conductive fibres arranged in warp and/or weft direction,
c) 2 to 10 % by weight flow passages forming elements arranged in warp and/or weft direction (preferably arranged in weft direction), wherein the flow passages forming elements are selected from the group consisting of monofilament yarn, glass yarn, carbon yarn, twisted yarn, covered yarn and combinations thereof, and
d) 0 to 5 % by weight of at least one additive (optionally 0 % by weight of at least one additive, i.e. no additive),

wherein the quantity proportions of components a) to d) add up to 100 % by weight, and
wherein the flow passages forming elements are arranged substantially transverse to the reinforcing fibres and forming flow passages at the side of the flow passages forming elements.

The flow passages forming elements are arranged substantially transverse to the reinforcing fibres and forming flow passages at the side of the flow passages forming elements. A substantially transverse arrangement of the reinforcing fibres and the electrical conductive fibres means in the context of the present invention the fibres are arranged with an angle in a range from 75° to 105°, preferably 80° to 100° and more preferably from 85° to 95°. In a particular preferred embodiment the reinforcing fibres and the electrical conductive fibres are arranged transverse to each other.

The present invention is based on the idea that instead of using only electrical conductive fibres like carbon fibers, the electrical conductive fibres are substituted by fibres of other materials which surprisingly allow a synergism of good flow characteristics, a sufficient electrical conductivity, good processability of the woven fabric and good interlaminar shear properties.

It is preferred that the woven fabric has an area weight between 70 to 250 g/m², preferably 100 to 200 g/m².

It is preferred that the flow passages forming elements are selected from the group consisting of polymeric monofilaments (polymeric monofilament yarn), and more preferably selected from the group consisting of polyethylene terephthalate (PET), polypropylene, polybutylene terephthalate, polyamide (PA) and combinations thereof.

According to a preferred embodiment the flow passages forming elements have a diameter of 50 to 350 µm, more preferably a diameter of 120 to 200 µm.

It is preferred that the flow passages forming elements are positioned in a distance of 2 to 8 mm from each other, more preferably 3 to 5 mm from each other.

The flow passages forming elements preferably comprise bundles of at least 1 and at most 5 monofilaments.

The reinforcing fibres are preferably flat glass fibres. It is preferred that the reinforcing fibres have a diameter of 4 to 30 µm, more preferably of 10 to 20 µm. Moreover, the reinforcing fibres are preferably present in the woven fabric as rovings.

It is preferred that the electrical conductive fibres are selected from the group consisting of carbon fibres, recycled carbon fibres, metal wires, glass yarn wrapped around with metal wires, metal coated synthetic yarns like polyamide, polyester, polypropylene or other synthetic yarns and combinations thereof. The electrical conductive fibres have preferably a diameter of 4 to 30 µm, more preferably of 5 to 20 µm, and even more preferably of 6 to 10 µm. The carbon fibres are preferably recycled carbon fibres. Moreover, it is preferred that the electrical conductive fibres are present as rovings.

It is preferred that the additive is an adhesion promoter to optimise the adhesion between the fabric and the later used resin. Also a bi-component/low melt yarn can be used to increase the stability of the fabrics by creating a bonding between longitudinal and transversal fiber directions.

According to a preferred embodiment, the woven fabric consists of
a) 40 to 70 % by weight of unidirectional reinforcing fibres arranged in warp and/or weft direction (preferably arranged in warp direction), wherein the reinforcing fibres are selected from the group consisting of glass fibres, ceramic fibres and combinations thereof,
b) 25 to 45 % by weight of carbon fibres arranged in warp and/or weft direction,
c) 3 to 8 % by weight of flow passages forming elements arranged in warp and/or weft direction (preferably arranged in weft direction), wherein the flow passages forming elements are selected from the group consisting of monofilament yarn, glass yarn, carbon yarn, twisted yarn, covered yarn and combinations thereof,
d) 0 to 5 % by weight of at least one additive (optionally 0 % by weight of at least one additive, i.e. no additive),

wherein the quantity proportions of components a) to d) add up to 100 % by weight, and
wherein the flow passages forming elements are arranged substantially transverse to the reinforcing fibres and forming flow passages at the side of the flow passages forming elements.

The woven fabric has preferably a resistance in the range of < 20 ohm in warp and/or weft direction, preferably < 10 ohm, more preferably < 5 ohm measured on a sample of 12cm x 12 cm.

According to the present invention also a vacuum induced resin infusion process for forming a fibre reinforced composite is provided which comprises or consists of the following steps:
a) providing a woven fabric according to the invention,
b) enclosing the woven fabric within a substantially air impervious casing having at least one means for applying a vacuum and at least one means for supplying a curable resin to the casing,
c) applying a vacuum to the casing via the at least one means for applying the vacuum and the at least one means,
d) introducing the curable resin via the at least one means for supplying a curable resin to the casing and
e) curing the resin to form the fibre reinforced composite.

It is preferred that the at least one means for applying a vacuum and the at least one means for supplying a curable resin to the casing are located on opposite sides of the casing.

According to the present invention also a fibre reinforced composite is provided which comprises the woven fabric as described above and an infused and cured resin.

With reference to the following figures and examples, the subject-matter according to the present invention is intended to be explained in more detail without wishing to restrict said subject-matter to the specific embodiments shown here.
- Fig. 1: is a diagram showing the flow rate of the fabric of the comparative example 1
- Fig. 2: is a diagram showing the flow rate of the fabric of the comparative example 2

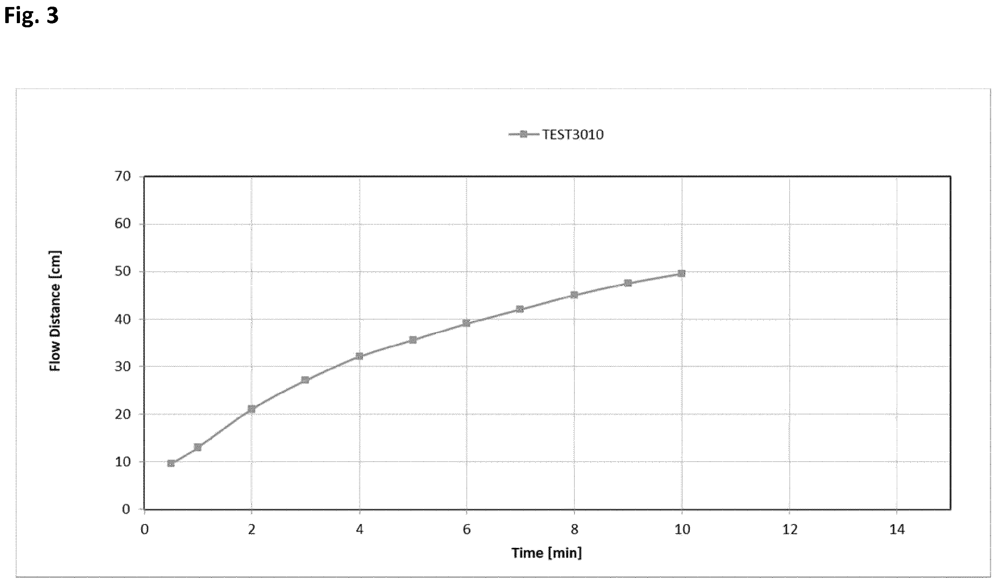

- Fig. 3: is a diagram showing the flow rate of the fabric of the example 1
- Fig. 4: a top view of a fabric according to the present invention
- Fig. 5: is a diagram showing the flow rate of the fabric of the example 2

### Comparative Example 1

The starting point was based on glass warp fabric which was first evaluated for transversal flow properties. At this stage there no carbon fibers were included.

The tested fabric (TEST2599) had the following construction:

### Weave pattern: Plain weave

Table 1 mentions the fibres used in comparative example 1.

**Table 1**

| **Orientation** | **TEX** | **Nominal weight [g/m²]** | **Fiber Type** |
|---|---|---|---|
| **Warp** | 200 | 94 | E-Glass |
| **Weft** | 130 | 58 | PET monofilament (Ø 0.35mm) |

The total weight of the fabric was 152 g/m².

### Infusion Setup

The infusion properties were tested with the following setup:
- Size of the preform 400x600 mm (width x length)
- 10 layers tested in 90°-direction (weft direction = K22)

### Resin system

The following resin and initiator were used:

| | |
|---|---|
| Resin: | Ashland AME 6001 INF-135 (VE) |
| Initiator: | Norox MCP-75 1,5% |

### Results

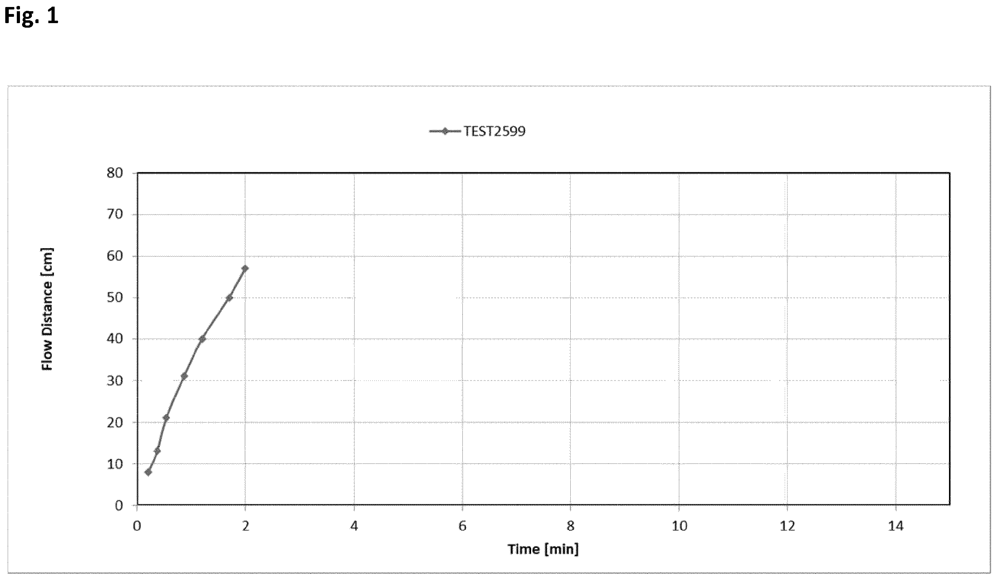

Fig. 1 shows the flow rate of the fabric of the comparative example 1 as the dependence of the flow distance from the time. It was observed that the fabric of the comparative example 1 showed a far too high flow rate. It was concluded that the diameter of monofilament yarn used for flow enhancement has to be reduced.

### Comparative example 2

Further infusions were made to optimize the flow properties and resin consumption. The use of 0.25 mm and 0.14 mm diameter monofilament was tested for flow properties. The next fabric was made with a lower filament diameter.

The second tested fabric (TEST2582) had the following construction:

### Weave pattern: Plain weave

Table 2 mentions the fibres used in comparative example 2.

**Table 2**

| **Orientation** | **TEX** | **Nominal weight [g/m²]** | **Fiber Type** |
|---|---|---|---|
| **Warp** | 200 | 94 | E-Glass |
| **Weft** | 650 | 29 | PET monofilament (Ø 0.25mm) |

The total weight of the fabric was 123 g/m².

### Infusion Setup

The infusion setup and other parameters are the same as in the first infusion setup (comparative example 1).

### The Results

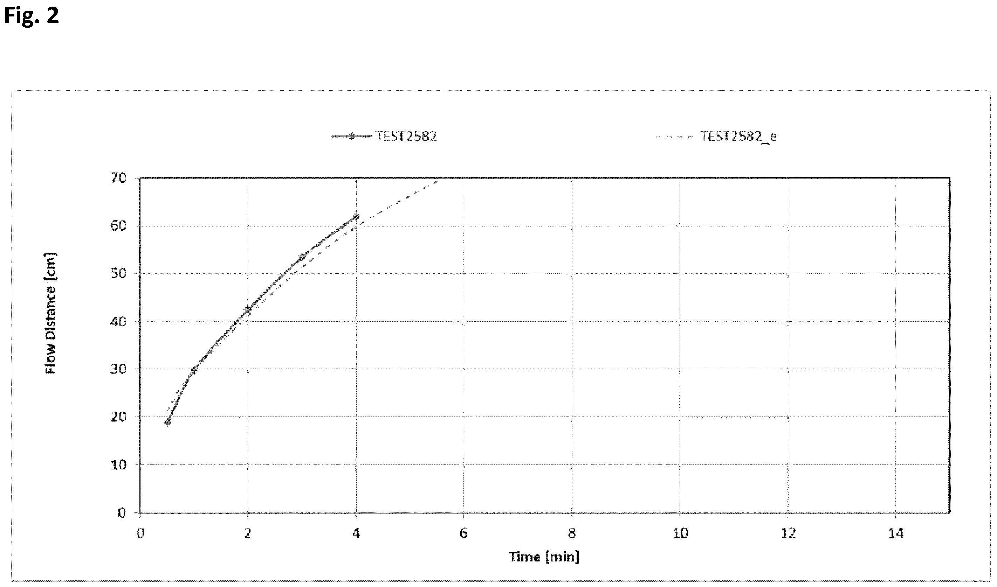

Fig. 2 shows the flow rate of the fabric of the preliminary test as the dependence of the flow distance from the time. It was observed that the fabric of comparative example 2 has is a lower flow rate than comparative example 1 which, however, was still too high. Hence, there was still a need to lower the flow rate .

### Example 1

In a further experiment carbon fibres were used in weft direction.

The carbon in weft direction was chosen to be 3K as it is of same tex as the warp direction. Using a higher tex would generate bumps on fabric. The weft monofilament area weight is only 5 g/m² and should provide enough stability to the fabric and infusibility together with additional carbon.

The tested fabric (TEST3010) has the following construction:

### Weave pattern: Plain weave

Table 3 mentions the fibres used in example 1.

**Table3**

| **Orientation** | **TEX** | **Nominal weight [g/m²]** | **Fiber Type** |
|---|---|---|---|
| **Warp** | 200 | 94 | E-Glass |
| **1^{st} Weft** | 21 | 6 | PET monofilament (Ø 0.14 mm) |
| **2^{nd} Weft** | 200 | 36 | 3K Carbon |

The total weight of the fabric was 123 g/m².

### Infusion Setup

The infusion setup and other parameters are the same as for comparative examples 1 and 2.

### The Results

The permeability of the fabric was improved compared to the comparative examples. 27% (36g/m²) of the fabric weight refers to carbon fibers which was arranged in weft direction.

### Example 2

Further experiments were conducted with different fiber diameters of monofilament, the correct flow level (around 10 minutes for 50cm width) was estimated to be reached with 140µm fiber diameter. In this case also the warp & weft-oriented carbon (3K) was added. The addition of carbon in warp direction does not seem to influence much on the flow characteristics of the fabric. The weft direction carbon adds a bit of thickness to the fabric and thereby enhances the flow properties.

The tested fabric (TEST2915) has the following construction:

### Weave pattern: Plain weave

Table 4 mentions the fibers used in example 2.

**Table 4**

| **Orientation** | **TEX** | **Nominal weight [g/m²]** | **Fiber Type** |
|---|---|---|---|
| **1^{st} Warp** | 200 | 75 | E-Glass |
| **2^{nd} Warp** | 200 | 19 | 3K Carbon |
| **1^{st} Weft** | 21 | 6 | PET monofilament (Ø 0.14mm) |
| **2^{nd} Weft** | 200 | 36 | 3K Carbon |

The total weight of the fabric was 136 g/m².

### Infusion Setup

The infusion properties are tested with the following setup:
- Size of the preform 400x600 mm (width x length)
- 10 layers tested in 90°-direction (weft direction)

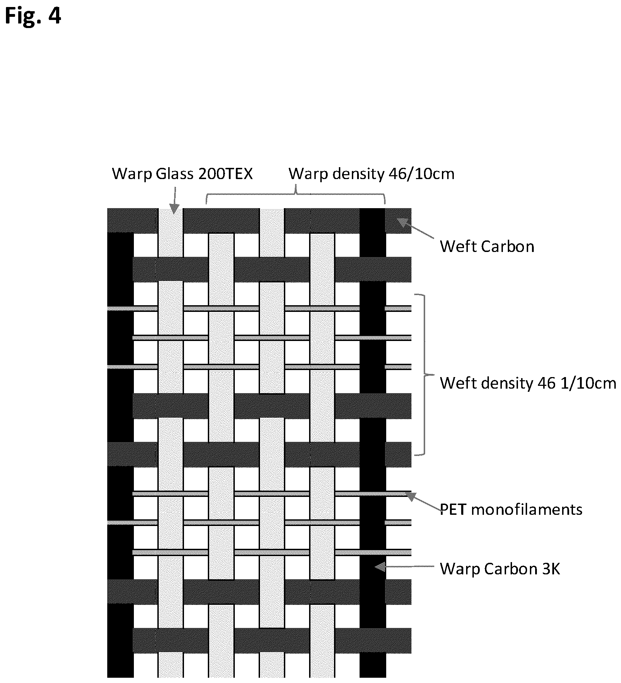

The fabric construction is shown in Fig. 4.

### Resin system

The following resin and initiator were used:

| | |
|---|---|
| Resin: | Ashland AME 6001 INF-135 (VE) |
| Initiator: | Norox MCP-75 1,5% |

### The Results

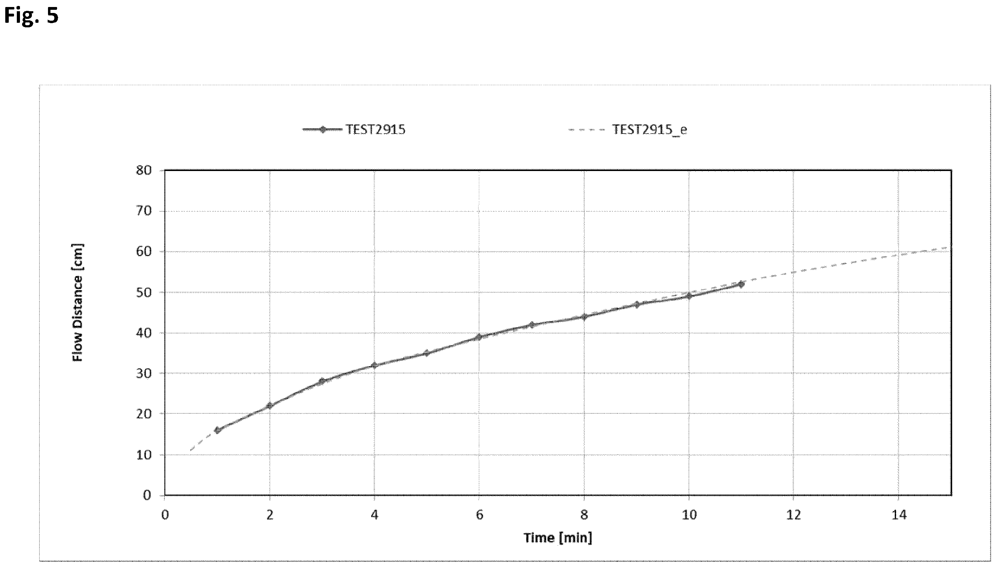

The infusion result was seen very interesting as it was fast enough and reached with rather low areal weight of fabric (136 g/m²) (s. Fig. 5).

The desired level of infusibility was reached and the conductivity of the material was found to be in target range. The conductivity can also be rather easily adapted by changing glass rovings in warp to carbon fibers or by changing monofilaments in weft to carbon fibres. The changes in warp had minimal effect on flow properties whereas the change in weft must be evaluated case by case.

## Claims

1. A woven fabric for the manufacture of fibre reinforced composites having an area weight from 50 to 300 g/m², consisting of
a) 30 to 75 % by weight unidirectional reinforcing fibres arranged in warp and/or weft direction, wherein the reinforcing fibres are selected from the group consisting of glass fibres, ceramic fibres and combinations thereof,
b) 20 to 50 % by weight electrical conductive fibres arranged in warp and/or weft direction,
c) 2 to 10 % by weight flow passages forming elements arranged in warp and/or weft direction, wherein the flow passages forming elements are selected from the group consisting of monofilament yarn, glass yarn, carbon yarn, twisted yarn, covered yarn and combinations thereof, and
d) 0 to 5% by weight of at least one additive,
the quantity proportions of components a) to d) add up to 100 % by weight and
wherein the flow passages forming elements are arranged substantially transverse to the reinforcing fibres and forming flow passages at the side of the flow passages forming elements.

2. The woven fabric of claim 1,
**characterized in that** the woven fabric has an area weight between 70 to 250 g/m², preferably 100 to 200 g/m².

3. The woven fabric of any of claims 1 or 2,
**characterized in that** the flow passages forming elements are selected from the group consisting of polymeric monofilaments, and more preferably selected from the group consisting of polyethylene terephthalate (PET), polypropylene, polybutylene terephthalate, polyamide (PA) and combinations thereof.

4. The woven fabric of any of claims 1 to 3,
**characterized in that** the flow passages forming elements have a diameter of 50 to 350 µm, preferably of 120 to 200 µm.

5. The woven fabric of any of claims 1 to 4,
**characterized in that** the flow passages forming elements are positioned in a distance of 2 to 8 mm from each other, preferably 3 to 5 mm from each other.

6. The woven fabric of any of claim 1 to 5,
**characterized in that** flow passages forming elements comprise bundles of at least 1 and at most 5 monofilaments.

7. The woven fabric of any of claims 1 to 6,
**characterized in that** the reinforcing fibres have a diameter of 4 to 30 µm, more preferably of 10 to 20 µm, wherein the reinforcing fibres are preferably present as rovings.

8. The woven fabric of any of claims 1 to 7,
**characterized in that** the electrical conductive fibres are selected from the group consisting of carbon fibres, recycled carbon fibres, metal wires, glass yarn wrapped around with metal wires, metal coated synthetic yarns like polyamide, polyester, polypropylene or other synthetic yarns and combinations thereof,
wherein that the electrical conductive fibres have preferably a diameter of 4 to 30 µm, more preferably of 5 to 20 µm, and even more preferably of 6 to 10 µm.

9. The woven fabric of any of claims 1 to 8,
**characterized in that** the electrical conductive fibres are present as rovings.

10. The woven fabric of any of claims 1 to 9,
**characterized in that** the additive is selected from the group consisting of
• at least one adhesion promoter, preferably as a coating of the fabric, to optimise the adhesion between the fabric and the later used resin,
• at least one bi-component yarn for a mechanical connection between transversal and longitudinal oriented fibers and
• combinations thereof.

11. The woven fabric of any of claims 1 to 10,
**characterized in that** the woven fabric consists of
a) 40 to 70% by weight of unidirectional reinforcing fibres arranged in warp and/or weft direction, wherein the reinforcing fibres are selected from the group consisting of glass fibres, ceramic fibres and combinations thereof,
b) 25 to 45 % by weight of carbon fibres arranged in warp and/or weft direction,
c) 3 to 8 % by weight of flow passages forming elements arranged in warp and/or weft direction, wherein the flow passages forming elements are selected from the group consisting of monofilament yarn, glass yarn, carbon yarn, twisted yarn, covered yarn and combinations thereof,
d) 0 to 5% by weight of at least one additive,
the quantity proportions of components a) to d) add up to 100 % by weight and
wherein the flow passages forming elements are arranged substantially transverse to the reinforcing fibres and forming flow passages at the side of the flow passages forming elements.

12. The woven fabric of any of claims 1 to 11,
**characterized in that** the woven fabric has a resistance in the range of < 20 ohm in warp and/or weft direction, preferably < 10 ohm, more preferably < 5 ohm measured on a sample of 12cm x 12 cm.

13. A vacuum induced resin infusion process for forming a fibre reinforced composite comprising the following steps:
a) providing a woven fabric of any of claims 1 to 12,
b) enclosing the woven fabric within a substantially air impervious casing having at least one means for applying a vacuum and at least one means for supplying a curable resin to the casing,
c) applying a vacuum to the casing via the at least one means for applying the vacuum and the at least one means,
d) introducing the curable resin via the at least one means for supplying a curable resin to the casing and
e) curing the resin to form the fibre reinforced composite.

14. The process of claim 13,
**characterized in that** the at least one means for applying a vacuum and the at least one means for supplying a curable resin to the casing are located on opposite sides of the casing.

15. A fibre reinforced composite comprising the woven fabric of any of claims 1 to 12 and an infused and cured resin.

## Patentansprüche

1. Gewebe zum Herstellen von faserverstärkten Verbundwerkstoffen mit einem Flächengewicht von 50 bis 300 g/m², bestehend aus:
a) 30 bis 75 Gew.-% unidirektionale Verstärkungsfasern, die in Kett- und/oder Schussrichtung angeordnet sind, wobei die Verstärkungsfasern aus der Gruppe bestehend aus Glasfasern, Keramikfasern und Kombinationen davon ausgewählt sind,
b) 20 bis 50 Gew.-% elektrisch leitfähige Fasern, die in Kett- und/oder Schussrichtung angeordnet sind,
c) 2 bis 10 Gew.-% in Kett- und/oder Schussrichtung angeordnete Strömungskanäle-Formelemente, wobei die Strömungskanäle-Formelemente aus der Gruppe bestehend aus Monofilamentgarn, Glasgarn, Kohlenstoffgarn, Zwirngarn, überzogenes Garn und Kombinationen davon ausgewählt sind, und
d) 0 bis 5 Gew.-% mindestens einen Zusatzstoff,
wobei die Mengenanteile der Komponenten a) bis d) zusammen 100 Gewichtsprozent ergeben und
wobei die Strömungskanäle-Formelemente im Wesentlichen quer zu den Verstärkungsfasern angeordnet sind und Strömungskanäle an der Seite der Strömungskanäle-Formelemente bilden.

2. Gewebe nach Anspruch 1,
**dadurch gekennzeichnet, dass** das Gewebe ein Flächengewicht zwischen 70 und 250 g/m², vorzugsweise zwischen 100 und 200 g/m², aufweist.

3. Gewebe nach einem der Ansprüche 1 oder 2,
**dadurch gekennzeichnet, dass** die Strömungskanäle-Formelemente aus der Gruppe bestehend aus polymeren Monofilamenten ausgewählt sind, und vorzugsweise aus der Gruppe bestehend aus Polyethylenterephthalat (PET), Polypropylen, Polybutylenterephthalat, Polyamid (PA) und Kombinationen davon ausgewählt sind.

4. Gewebe nach einem der Ansprüche 1 bis 3,
**dadurch gekennzeichnet, dass** die Strömungskanäle-Formelemente einen Durchmesser von 50 bis 350 µm, vorzugsweise von 120 bis 200 µm, aufweisen.

5. Gewebe nach einem der Ansprüche 1 bis 4,
**dadurch gekennzeichnet, dass** die Strömungskanäle-Formelemente in einem Abstand von 2 bis 8 mm voneinander, vorzugsweise 3 bis 5 mm voneinander, angeordnet sind.

6. Gewebe nach einem der Ansprüche 1 bis 5,
**dadurch gekennzeichnet, dass** die Strömungskanäle-Formelemente Bündeln von mindestens 1 und höchstens 5 Monofilamenten umfassen.

7. Gewebe nach einem der Ansprüche 1 bis 6,
**dadurch gekennzeichnet, dass** die Verstärkungsfasern einen Durchmesser von 4 bis 30 µm, vorzugsweise von 10 bis 20 µm, aufweisen, wobei die Verstärkungsfasern vorzugsweise als Vorgarne vorliegen.

8. Gewebe nach einem der Ansprüche 1 bis 7,
**dadurch gekennzeichnet, dass** die elektrisch leitfähigen Fasern aus der Gruppe bestehend aus Kohlenstofffasern, recycelten Kohlenstofffasern, Metalldrähten, mit Metalldrähten umwickelten Glasfasern, metallbeschichteten synthetischen Fasern wie Polyamid, Polyester, Polypropylen oder anderen synthetischen Fasern und Kombinationen davon ausgewählt sind,
wobei die elektrisch leitfähigen Fasern vorzugsweise einen Durchmesser von 4 bis 30 µm, noch bevorzugter von 5 bis 20 µm, und am meisten bevorzugt von 6 bis 10 µm, aufweisen.

9. Gewebe nach einem der Ansprüche 1 bis 8,
**dadurch gekennzeichnet, dass** die elektrisch leitfähigen Fasern als Vorgarne vorliegen.

10. Gewebe nach einem der Ansprüche 1 bis 9,
**dadurch gekennzeichnet, dass** der Zusatzstoff aus der Gruppe bestehend aus
• mindestens einen Haftvermittler, vorzugsweise als Beschichtung des Gewebes, um die Haftung zwischen dem Gewebe und dem später verwendeten Harz zu optimieren,
• mindestens ein Zweikomponentengarn für eine mechanische Verbindung zwischen transversal und longitudinal orientierten Fasern und
• Kombinationen davon ausgewählt sind.

11. Gewebe nach einem der Ansprüche 1 bis 10,
**dadurch gekennzeichnet, dass** das Gewebe besteht aus
a) 40 bis 70 Gew.-% unidirektionale Verstärkungsfasern umfasst, die in Kett- und/oder Schussrichtung angeordnet sind, wobei die Verstärkungsfasern aus der Gruppe von Glasfasern, Keramikfasern und Kombinationen davon ausgewählt sind,
b) 25 bis 45 Gew.-% Kohlenstofffasern, die in Kett- und/oder Schussrichtung angeordnet sind,
c) 3 bis 8 Gew.-% in Kett- und/oder Schussrichtung angeordneten Strömungskanäle-Formelementen, wobei die Strömungskanäle-Formelemente aus der Gruppe von Monofilamentgarn, Glasgarn, Kohlenstoffgarn, Zwirngarn, überzogenes Garn und Kombinationen davon ausgewählt sind,
d) 0 bis 5 Gew.-% mindestens einen Zusatzstoff,
wobei die Mengenanteile der Komponenten a) bis d) zusammen 100 Gewichtsprozent ergeben und
wobei die Strömungskanäle-Formelemente im Wesentlichen quer zu den Verstärkungsfasern angeordnet sind und Strömungskanäle an der Seite der Strömungskanäle-Formelemente bilden.

12. Gewebe nach einem der Ansprüche 1 bis 11,
**dadurch gekennzeichnet, dass** das Gewebe einen Widerstand im Bereich von < 20 Ohm in Kett- und/oder Schussrichtung, vorzugsweise < 10 Ohm, noch bevorzugter < 5 Ohm, gemessen an einer Probe von 12 cm x 12 cm, aufweist.

13. Ein vakuuminduziertes Harzinfusionsverfahren zum Herstellen eines faserverstärkten Verbundwerkstoffs, das die folgenden Schritte umfasst:
a) Bereitstellen eines Gewebes gemäß einem der Ansprüche 1 bis 12,
b) Einschließen des Gewebes in einer im Wesentlichen luftundurchlässigen Hülle, die mindestens ein Mittel zum Erzeugen eines Vakuums und mindestens ein Mittel zum Zuführen eines härtbaren Harzes zur der Hülle aufweist,
c) Anlegen eines Vakuums an die Hülle über das mindestens eine Mittel zum Anlegen des Vakuums und das mindestens ein Mittel,
d) Einbringen des härtbaren Harzes über das mindestens eine Mittel zum Zuführen eines härtbaren Harzes in die Hülle und
e) Aushärten des Harzes, um den faserverstärkten Verbundwerkstoff zu bilden.

14. Verfahren nach Anspruch 13,
**dadurch gekennzeichnet, dass** das mindestens eine Mittel zum Anlegen eines Vakuums und das mindestens eine Mittel zum Zuführen eines härtbaren Harzes zu der Hülle auf gegenüberliegenden Seiten der Hülle angeordnet sind.

15. Faserverstärkter Verbundwerkstoff, der das Gewebe gemäß einem der Ansprüche 1 bis 12 und ein infundiertes und ausgehärtetes Harz umfasst.

## Revendications

1. Tissu tissé pour la fabrication de composites renforcés par des fibres présentant un grammage de 50 à 300 g/m², constitué
a) de 30 à 75 % en poids de fibres de renforcement unidirectionnelles agencées dans une direction de chaîne et/ou de trame, dans lequel les fibres de renforcement sont choisies dans le groupe comprenant des fibres de verre, des fibres de céramique et des combinaisons de celles-ci,
b) de 20 à 50 % en poids de fibres électroconductrices agencées dans une direction de chaîne et/ou de trame,
c) de 2 à 10 % en poids d'éléments formant des passages d'écoulement agencés dans une direction de chaîne et/ou de trame, dans lequel les éléments formant des passages d'écoulement sont choisis dans le groupe comprenant des fils monofilaments, des fils de verre, des fils de carbone, des fils torsadés, des fils recouverts et des combinaisons de ceux-ci, et
d) de 0 à 5 % en poids d'au moins un additif,
les proportions quantitatives des composants a) à d) s'ajoutent jusqu'à 100 % en poids et
dans lequel les éléments formant des passages d'écoulement sont agencés sensiblement transversalement aux fibres de renforcement et formant des passages d'écoulement sur le côté des éléments formant des passages d'écoulement.

2. Tissu tissé selon la revendication 1,
**caractérisé en ce que** le tissu présente un grammage compris entre 70 et 250 g/m², de préférence entre 100 et 200 g/m².

3. Tissu tissé selon l'une quelconque des revendications 1 ou 2,
**caractérisé en ce que** les éléments formant des passages d'écoulement sont choisis dans le groupe comprenant des monofilaments polymères, et de manière plus préférée choisis dans le groupe comprenant le polyéthylène téréphtalate (PET), le polypropylène, le polybutylène téréphtalate, le polyamide (PA) et des combinaisons de ceux-ci.

4. Tissu tissé selon l'une quelconque des revendications 1 à 3,
**caractérisé en ce que** les éléments formant des passages d'écoulement présentent un diamètre de 50 à 350 µm, de préférence de 120 à 200 µm.

5. Tissu tissé selon l'une quelconque des revendications 1 à 4,
**caractérisé en ce que** les éléments formant des passages d'écoulement sont positionnés à une distance de 2 à 8 mm les uns des autres, de préférence de 3 à 5 mm les uns des autres.

6. Tissu tissé selon l'une quelconque des revendications 1 à 5,
**caractérisé en ce que** les éléments formant des passages d'écoulement comprennent des faisceaux d'au moins 1 et d'au plus 5 monofilaments.

7. Tissu tissé selon l'une quelconque des revendications 1 à 6,
**caractérisé en ce que** les fibres de renforcement présentent un diamètre de 4 à 30 µm, de manière plus préférée de 10 à 20 µm, dans lequel les fibres de renforcement sont de préférence présentes sous la forme de stratifils.

8. Tissu tissé selon l'une quelconque des revendications 1 à 7,
**caractérisé en ce que** les fibres électroconductrices sont choisies dans le groupe comprenant des fibres de carbone, des fibres de carbone recyclées, des fils métalliques, des fils de verre enveloppés avec des fils métalliques, des fils synthétiques revêtus de métal comme du polyamide, du polyester, du polypropylène ou d'autres fils synthétiques et des combinaisons de ceux-ci,
dans lequel les fibres conductrices électriques présentent de préférence un diamètre de 4 à 30 µm, de manière plus préférée de 5 à 20 µm, et de manière encore plus préférée de 6 à 10 µm.

9. Tissu tissé selon l'une quelconque des revendications 1 à 8,
**caractérisé en ce que** les fibres électroconductrices sont présentes sous la forme de stratifils.

10. Tissu tissé selon l'une quelconque des revendications 1 à 9,
**caractérisé en ce que** l'additif est choisi dans le groupe comprenant
• au moins un promoteur d'adhérence, de préférence sous la forme d'un revêtement du tissu, pour optimiser l'adhérence entre le tissu et la résine utilisée ultérieurement,
• au moins un fil bi-composant pour une liaison mécanique entre des fibres orientées transversalement et longitudinalement et
• des combinaisons de ceux-ci.

11. Tissu tissé selon l'une quelconque des revendications 1 à 10, **caractérisé en ce que** le tissu tissé est constitué
a) de 40 à 70 % en poids de fibres de renforcement unidirectionnelles agencées dans une direction de chaîne et/ou de trame, dans lequel les fibres de renforcement sont choisies dans le groupe comprenant des fibres de verre, des fibres de céramique et des combinaisons de celles-ci,
b) de 25 à 45 % en poids de fibres de carbone agencées dans une direction de chaîne et/ou de trame,
c) de 3 à 8 % en poids d'éléments formant des passages d'écoulement agencés dans une direction de chaîne et/ou de trame, dans lequel les éléments formant des passages d'écoulement sont choisis dans le groupe comprenant des fils monofilaments, des fils de verre, des fils de carbone, des fils torsadés, des fils recouverts et des combinaisons de ceux-ci,
d) de 0 à 5 % en poids d'au moins un additif,
les proportions quantitatives des composants a) à d) s'ajoutent jusqu'à 100 % en poids et
dans lequel les éléments formant des passages d'écoulement sont agencés sensiblement transversalement aux fibres de renforcement et formant des passages d'écoulement sur le côté des éléments formant des passages d'écoulement.

12. Tissu tissé selon l'une quelconque des revendications 1 à 11,
**caractérisé en ce que** le tissu présente une résistance dans la plage de < 20 ohms dans une direction de chaîne et/ou de trame, de préférence < 10 ohms, de manière plus préférée < 5 ohms, mesurée sur un échantillon de 12 cm x 12 cm.

13. Procédé d'infusion de résine induite par un vide pour former un composite renforcé de fibres comprenant les étapes suivantes consistant à :
a) fournir un tissu tissé selon l'une quelconque des revendications 1 à 12,
b) enfermer le tissu tissé dans un boîtier sensiblement imperméable à l'air présentant au moins un moyen pour appliquer un vide et au moins un moyen pour fournir une résine durcissable au boîtier,
c) appliquer un vide au boîtier via le au moins un moyen d'application du vide et le au moins un moyen,
d) introduire la résine durcissable via le au moins un moyen pour fournir une résine durcissable au boîtier et
e) faire durcir la résine pour former le composite renforcé par des fibres.

14. Procédé selon la revendication 13,
**caractérisé en ce que** le au moins un moyen pour appliquer un vide et le au moins un moyen pour fournir une résine durcissable au boîtier sont situés sur des côtés opposés du boîtier.

15. Composite renforcé par des fibres comprenant le tissu tissé selon l'une quelconque des revendications 1 à 12 et une résine infusée et durcie.
